# EUROPEAN PATENT APPLICATION

(11) **EP 2 749 879 A2**
(43) Date of publication of application: **02.07.2014**
(21) Application number: 13197761.3
(22) Date of filing: 17.12.2013
(51) Int. Cl.: G01N 29/04, G01N 29/22, G01N 29/265

(54) **Optical encoded nondestructive inspection**

(30) Priority: 31.12.2012 US 201213731580
(71) Applicant: Areva NP Inc., Lynchburg, VA 24506-0935 (US)
(72) Inventor: Glass III, Samuel William, LYNCHBURG, 24503 (US); Thigpen, Bradley A., HARRISBURG, 28075 (US)
(74) Representative: Blot, Philippe Robert Emile

(57) **Abstract**

This invention applies optical sensing technology with an ultrasound inspection system to associate encoded position data with the inspection data. The compact electronics of the optical system can be attached to the inspection assembly to allow fully encoded position information to be associated with the ultrasonic, eddy current, or other nondestructive examination data without substantially impacting the overall envelope of the NDE inspection equipment. Moreover, because of the small size, the optical system can be used in tandem to monitor skew or twist of the inspection equipment with respect to the normal rectilinear transducer orientation. The inspection equipment position information is then coupled to the inspection data to provide data outputs equivalent to fully encoded multi-axis manipulator automated scans, but with less setup burden and equipment expense.

## Description

### BACKGROUND OF THE INVENTION

### 1. Field of the Invention

The present invention relates to an inspection system, and, more particularly, the present invention relates to a system for performing manual inspections while providing fully encoded/recorded data.

### 2. Description of the Related Art

While the present invention may be used in a variety of industries, the environment of a nuclear power plant will be discussed herein for illustrative purposes. A nuclear power plant relies on the nuclear fuel fission reaction inside a pressure vessel to heat the water, thereby producing steam that drives a turbine that drives a generator that ultimately produces electricity. The steam then passes through condensers to turn it back into water for pumps to ultimately circulate the fluid back into the reactor to be re-heated by the fission reaction and the cycle is repeated. This describes the boiling water reactor or BWR cycle. In pressurized water reactor (PWR) reactors, the hot water passes through a steam generator heat exchanger then is pumped back into the reactor to complete the primary water coolant loop. The secondary steam loop sends water from the secondary side of the steam generator heat exchanger to the turbines that are connected to the generators that produce electricity as described above for the BWRs. In the case of both PWRs and BWRs, the steam and fluid are passed through a system of high pressure pipes, vessels, pumps, and heat exchangers that must maintain the pressure boundary leak-tight integrity. This piping and pressure system is continually subject to inside and outside diameter (ID and OD) mechanisms that threaten the system integrity including: corrosion, erosion, fatigue, pitting, and wear. Nondestructive examinations (NDE) such as ultrasound (UT) and various electromagnetic techniques (ET) are recommended or required to be performed on the piping and pressure boundary systems in order to detect failure mechanisms before they develop into a through-wall failure and leak.

Automated and encoded NDE examinations are preferred because they provide a permanent record of the examination allowing for independent evaluation and generally support better detection and sizing of any discovered indications. Fully automated examinations, however, require several inches of space around the component to be examined and a heavy manipulator or robot to deliver the transducer, which may be difficult to fit into many of the confined spaces. Moreover, delivery and installation of the encoded systems typically requires two or more people who may incur significant radiation dose during the installation and removal processes as well as additional personnel to provide technical support of the mechanical components of the examination system.

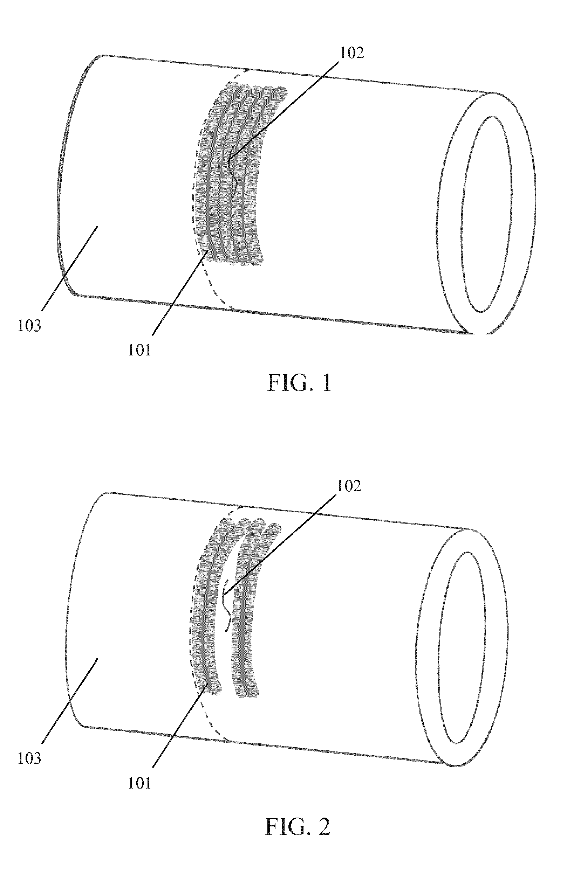

Manual examinations have been allowed for many of these components to reduce costs and dose while preserving a modicum of assurance of the structural integrity of the part. When carefully performed with overlapping scan coverage of the inspection area, all significant cracks or indications can be detected - see Figure 1, which shows the overlapping scan paths 101 of a properly performed inspection to detect a circumferential crack 102 on an object 103 under inspection. Manual examination, however, is subject to human error and irregularity of uncontrolled scanning and may result in significant flaws being missed - see Figure 2, which shows the scan paths 101 of an improperly performed inspection that did not detect a circumferential crack 102 on an object 103 under inspection. Alternatively, the manual scanner can be overly conservative and spend significantly more time than necessary in scanning to generate a very high density scan. With all manual un-encoded examinations as discussed above, current manual NDE scan methods offer no auditable record to assure the scan has been conducted with sufficient density to fully inspect the part thereby assuring the component integrity. Thus, automated inspection is favored over manual inspections.

Wheel encoded (one degree of freedom) and ball encoded (two degrees of freedom) freehand scanners allow an inspector to provide a manual examination with the advantages of a fully encoded inspection and several vendors market such devices. These devices, however, are large, subject to wheel or ball slip on the surface thereby leading to inaccurate encoding, and generally are not being widely used. The unreliability of these mechanical devices is worsened by the gumming and slipping effect from the ultrasonic coupling gel that is typically required for UT examinations.

What is needed is a means of allowing inexpensive manual inspections to be performed with the added value of fully encoded data and with minimal additional equipment or schedule delays. Encoding of a manual scanner without significantly expanding the envelope of the transducer package can allow manual inspections to continue with minimal preparation, setup, and scan time while additionally providing the advantages of a fully encoded inspection.

### SUMMARY OF THE INVENTION

This invention applies optical sensing technology with an NDE inspection system to associate encoded position data with the inspection data. This invention uses optical technology to provide this encoding and associate the position data with the NDE inspection data. Typically the optical encoding electronics functions by taking a series of pictures of the surface it is navigating over and determining the relative move distance between sequential images by correlating the pixel position of features recognized in the sequential images. The movement of recognized features in the image corresponds to the motion of the optical electronics over the surface. The ability to recognize surface features is frequently enhanced by an LED. There are numerous vendors that provide various embodiments of this optical technology to measure relative position of the optical device. For this invention, the important features of the optical system are a compact form factor with high light sensitivity bandwidth that can work dry or through clear or translucent ultrasonic gel, and even with some variation in surface contours that may slightly vary the lift-off distance of the camera from the surface.

The compact electronics of the optical system can be attached to the UT transducer assembly without substantially impacting the overall envelope of the UT transducer. Moreover, because of the small size, the optical system can be used in tandem to monitor skew or twist of the transducers with respect to the normal rectilinear transducer orientation. This is important since the sensitivity of many UT transducers to the required detectable flaws is compromised if the transducer skew is more than a few degrees from the target alignment orientation. This is difficult to control manually, but the computer can recognize if the transducer is misaligned and can issue an audible and/or visual warning so the operator can adjust and perhaps repeat part of the scan to achieve adequate coverage with the correct alignment. The transducer's position information is coupled to the UT or ET or other NDE data to provide data outputs equivalent to fully encoded multi-axis manipulator automated scans, but with less setup burden and equipment expense. By registering the surface encoding with respect to three dimensional geometries and complex shapes, this encoding approach also allows full use of three dimensional modeling data interpretation algorithms and three dimensional projections of any reflections observed while preserving the easy setup and data acquisition associated with traditional manual UT examinations.

The inspection system preferably includes an UT or ET transducer or other NDE sensor for obtaining data regarding the internal structure of an object to be inspected plus a position detector for determining the location of the transducer relative the object. The position detector may include an optical encoder having an optoelectronic sensor for measuring position relative an outer surface of the object and a light source such as a light emitting diode for illuminating the viewing area of the sensor. A housing is provided to hold the transducer and the optical encoder. The housing may include a first chamber configured to hold the transducer and a second chamber configured to hold the position detector. A cover is connected to the housing to retain the transducer and the position detector in place. A spring may be positioned between the cover and the encoder to exert a force against the encoder such that the sensing surface of the encoder is adjacent an opening in a corresponding surface of the housing so that it contacts or maintains an acceptable lift-off from the inspection surface to preserve position encoding even on slightly irregular surfaces. A recessed lip may be provided adjacent the opening to ensure that the encoder does not completely pass through the housing.

Once the inspection portion of the object has been determined, the system is passed over the object surface so that the transducer can obtain structural data regarding the internal structure of the object. At the same time, the encoder obtains position data regarding the position of the transducer (relative to the object) during the inspection. The structural and position data is captured and transmitted to additional equipment for processing. One aspect of this processing may be to provide real-time feedback to the system operator as to which portions of the object were inspected, ensuring that no portions of the intended inspection area were omitted. Using the two optical sensors in tandem, the system can provide feedback to the system operator regarding transducer skew relative to the desired orientation of the transducer. If skew or the scan-line spacing exceeds the maximum tolerance, the operator can be alerted to immediately repeat the problem scan area. Following the data acquisition scan, the encoded data may be displayed in a number of display modes including C-scan or terrain-map representations of the scan surface coupled with the NDE signal representing any flaws or anomalies observed within the scan area. Such displays may be analyzed to determine whether any defects are present in the object and to quantify any such defects as to location and size.

### DESCRIPTION OF THE DRAWINGS

The present invention is described with reference to the accompanying drawings, which illustrate exemplary embodiments and in which like reference characters reference like elements. It is intended that the embodiments and figures disclosed herein are to be considered illustrative rather than restrictive.
Figure 1 shows the overlapping scan paths of a properly performed inspection to detect a circumferential crack.
Figure 2 shows the scan paths of an improperly performed inspection that did not detect a circumferential crack.
Figure 3 shows an exploded view of an inspection system of the present invention.
Figure 4 shows a front view of the inspection system of Figure 3.
Figure 5 shows a top view of the inspection system of Figure 3.
Figure 6 shows a cross-sectional view of the inspection system of Figure 3 along line A-A of Figure 5.
Figure 7 shows a cross-sectional view of the inspection system of Figure 3 along line B-B of Figure 5.

### DETAILED DESCRIPTION OF THE INVENTION

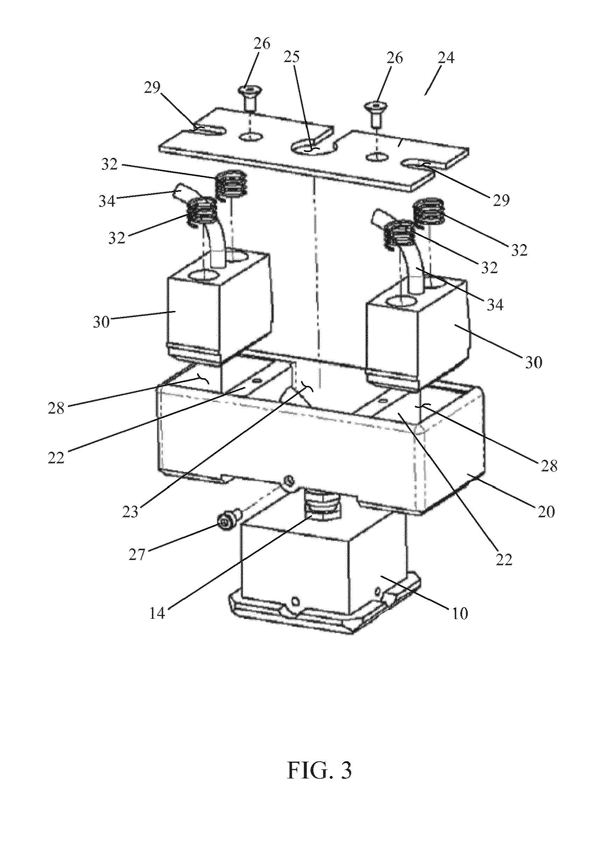

Figure 3 shows an exploded view of a preferred inspection system 1, including a transducer 10. In UT examination, an ultrasound transducer is passed over the object being inspected. The transducer emits pulsed ultrasonic waves or electromagnetic waves that are imparted to the object. The waves pass into the object and are reflected back by any interface or material anomaly, such as the back wall of the object or from an imperfection within the object such as a crack, pit, eroded area, or a weld inclusion. The transducer receives the reflected waves and sends the received data to connected diagnostic equipment, such as an oscilloscope. For UT inspections, these results typically are displayed in the form of a signal with an amplitude representing the intensity of the reflection and the arrival time of the reflection representing the distance (depth) to the reflecting interface. For electromagnetic sensors, the coils generating the electromagnetic waves are sensed for changes in impedance or magnetic field strength.

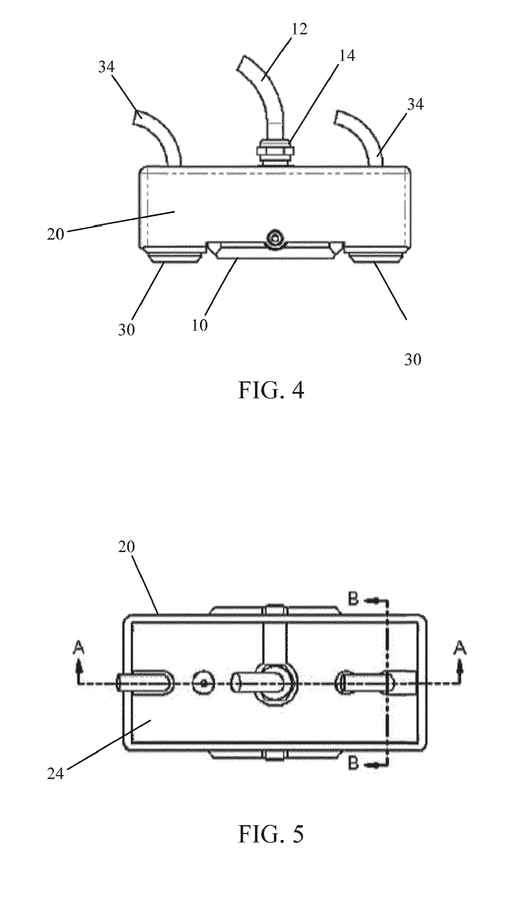

Figures 4 and 5 show front and top views, respectively, of the assembled inspection system 1. A housing 20 is provided with interior walls 22 defining an interior chamber 23 that is sized and configured to receive the transducer 10 such that the ultrasound transmitting and receiving elements are not inhibited. A cover plate 24 fits atop the housing and the transducer 10. The transducer 10 may be connected to its affiliated diagnostic equipment via wire bundle 12, which may be connected to the transducer via a connection 14. Preferably, the cover plate 24 contains a central opening 25 sized and configured to fit around or under the connection 14, more preferably under a flange portion of the connection 14. Connectors 26, such as screw or bolts, may be provided to couple the cover plate 24 with the housing body 20 once they are in position. The connectors 26 cooperate with mating openings provided in the interior walls 22. An additional fastener 27 may be provided to cooperate with a mating opening in the housing of transducer 10 to couple the housing 20 and transducer 10.

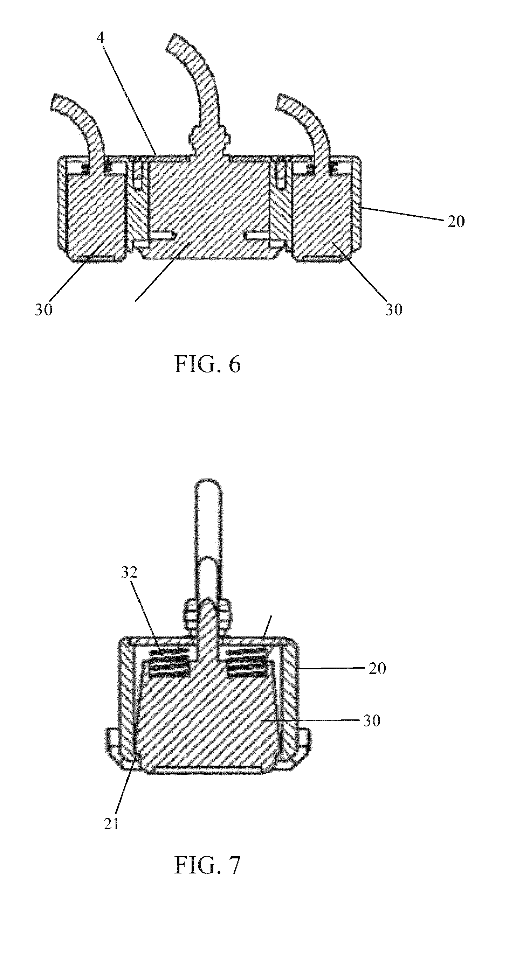

The interior wall 22 further defines a chamber 28 sized and configured to receive an optical encoder 30. A lip 21 or other retaining means may be provided on the lower edge of the housing 20 to prevent the encoder 30 from passing therethrough. The encoder 30 may communicate with it affiliated equipment via wire bundle 34. Alternatively, encoder 30 may be connected to its affiliated equipment wirelessly, obviating the need for wire bundle 34. The cover plate 24 preferably is provided with a side opening 29 to allow the wire bundle 34 (if present) to pass therethrough. Biasing members 32, such as springs, may be provided between the optical encoder 30 and the cover plate 24 to ensure the encoder is retained in the desired position at the lower portion of the housing 20 adj acent the UT transducer 10. The encoder 30 may be provided with a receptacle into which one end of the biasing member 32 is positioned. This is illustrated in Figures 6, which shows a cross-sectional view of the inspection system 1 along line A-A of Figure 5, and 7, which shows a cross-sectional view of the inspection system 1 along line B-B of Figure 5. Preferably, the inspection system 1 includes two optical encoders 30, providing dual sources of position data.

In use, the system 1 is passed over or along the element to be inspected in the same manner as would the transducer 10 if used alone. The transducer 10 emits and receives ultrasound data, which is provided to additional equipment for processing and interpretation. The optical encoder(s) 30 measure and provide position data to be used in conjunction with the transducer data. The optical encoder 30 preferably includes a light to illuminate the surface of the element being inspected and an optoelectronic sensor to take successive images of the illuminated surface. The images are captured in continuous succession and compared with each other to determine how far the system 1 has moved. As many as one thousand successive images or more are captured every second. The images are processed using cross correlation to calculate how much each successive image is offset from the previous one, and therefore how far the system 1 has moved. The light may be provided in the form of a light-emitting diode (LED) or a laser diode. Thus, by capturing the position of each ultrasound inspection, the system 1 allows the operator to ensure that the entirety of the intended measurement area was in fact inspected.

The data from the transducer 10 and optical encoder 30 are sent to processing equipment via wire bundles 12, 34 or wirelessly. Such processing equipment may take the form of a non-transitory computer system. The inspection and position data can be used a variety of ways. One way in which the position data can be used is to provide the operator of the inspection system 1 real-time feedback regarding the inspection process. For example, the position information can be used to tell the operator which portions of the object under inspection have been examined. One preferred manner of doing this is to change the image of the object on the operator's display, such as by changing the color of the object on the display as it is examined. In this manner, the operator could ensure that data has been collected for the entirety of the area intended to be inspected. By "coloring" the object on the display, the operator can know that the full inspection has been performed or if there are unexamined areas remaining for inspection. Preferably, the inspection and position data are linked such that an area of the object will be shown as having been inspected if the transducer 10 was passed over that area and inspection data was received. If for some reason the transducer 10 was not operational or inspection data was not received when the transducer 10 was passed over the area, then it should not be shown as having been inspected.

The inspection and position data can also be stored for later examination. This allows skilled personnel to review and interpret the data at a convenient time and location. This minimizes the time required for the inspection system to remain in the environs of the object under inspection, inherently reducing time and expense related to having the inspection equipment in place.

The system 1 thus allows fully encoded UT inspection data to be captured, stored, and displayed as though the scan was performed by an automated scanner without the setup difficulty or additional space required for a traditional automated scan system. Because the data is captured and stored, it may be analyzed and interpreted off-line in a comfortable environment. This allows the acquisition to be performed by relatively untrained inspectors, with the assurance that full measurements were made and subsequently the data may be interpreted by more highly qualified personnel.

By providing two optical encoders 30, the system 1 can provide both absolute centroid position and transducer skew angle information. This provides assurance that the manual orientation of angle beam transducers is in fact aligned in accordance with the planned scan. Spacing of the encoders 30 is chosen as large as practical to reduce the error of the skew angle yet as small as practical to minimize the overall envelope of the transducer. Additionally, the two optical encoders allow redundant measurements to be correlated and used to detect and compensate anomalous position signals.

This invention applies optical sensing technology with an UT inspection system to associate encoded position data with the inspection data. The compact electronics of the optical system can be attached to the UT transducer assembly to allow fully encoded position information to be associated with the UT data without substantially impacting the overall envelope of the UT transducer. Moreover, because of the small size, the optical system can be used in tandem to monitor skew or twist of the transducers with respect to the normal rectilinear transducer orientation. The transducer's position information is then coupled to the UT data to provide cross-sectional view of the inspected equipment and data maps (B and C scan data outputs) equivalent to fully encoded multi-axis manipulator automated scans, but with less setup burden and equipment expense. This two dimensional surface encoding approach can be registered with a three dimensional model of the inspection object to allow full use of three dimensional modeling data interpretation algorithms and three dimensional projections of any reflections observed while preserving the easy setup and data acquisition associated with traditional manual UT or alternate NDE examinations.

An additional use of this technology is to enable wheeled or stepping remotely operated vehicles (ROVs) to precisely drive UT transducers along a desired scan path. Without accurate encoding of an ROV, the scan path is difficult or impossible to be sufficiently controlled to assure the complete target volume has been inspected. Moreover, data treatments such as synthetic aperture focusing techniques (SAFT) and other data enhancements that rely heavily on precise positioning data cannot be used, whereas these types of data treatment are possible with the fully encoded feedback from the optical system 1. With such compact position feedback, independent free-motion manipulating devices may be controlled to move the transducers 10 to any region of interest without a fixed scanner or manipulator.

While the preferred embodiments of the present invention have been described above, it should be understood that they have been presented by way of example only, and not of limitation. It will be apparent to persons skilled in the relevant art that various changes in form and detail can be made therein without departing from the spirit and scope of the invention. Thus the present invention should not be limited by the above-described exemplary embodiments, but should be defined only in accordance with the following claims and their equivalents. Furthermore, while certain advantages of the invention have been described herein, it is to be understood that not necessarily all such advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other advantages as may be taught or suggested herein.

## Claims

1. An inspection system, comprising:
a transducer (10) for obtaining data regarding the internal structure of an object; and
a position detector (30) for determining the location of the transducer (10) relative the object, the position detector including an optoelectronic sensor for measuring position relative an outer surface of the object.

2. The inspection system of claim 1, further including a housing (20) having a first chamber (23) configured to receive said transducer (10) and a second chamber (28) configured to receive said position detector (30).

3. The inspection system of claim 2, further comprising a cover (24) coupled to said housing (20) to retain said transducer (10) and said position detector (30) in place.

4. The inspection system of claim 2 or 3, further comprising a biasing member (32) operatively connected to said position detector (30) to exert a force against said position detector (30) such that a lower surface of said position detector(30) is adjacent an opening in a corresponding surface of said housing (20).

5. The inspection system of claim 4, wherein said housing (20) further includes a lip (21) that prevents said position detector (30) from passing through said opening.

6. The inspection system of claim 1, wherein said position detector (30) further includes a light for illuminating the outer surface.

7. A method of inspecting an object (103) having an outer surface, comprising:
determining a portion of an object (103) to be inspected;
providing an inspection system including a transducer (10) for obtaining structural data regarding the internal structure of the object (103) and an encoder (30) for obtaining position data regarding the position of the inspection system relative the object (103);
inspecting the object (103) with said inspection system; and
capturing said structural data and said position data during said inspecting.

8. The method of claim 7, further comprising ensuring all of said portion was inspected.

9. The method of claim 7 or 8, further comprising
processing said structural data to determine the presence of any defects in the object (103); and
processing said position data to determine which areas of the object were inspected.
